# EUROPEAN PATENT SPECIFICATION

(11) **EP 2 124 808 B1**
(45) Date of publication and mention of the grant of the patent: **31.03.2021**
(21) Application number: 08712785.8
(22) Date of filing: 06.02.2008
(51) Int. Cl.: A61C 8/00

(54) **AN ATTACHMENT SYSTEM FOR ATTACHING A DENTAL SUPERSTRUCTURE TO AN IMPLANT**
BEFESTIGUNGSSSTEM ZUR BEFESTIGUNG EINES ZAHNAUFBAUS AN EINEM IMPLANTAT
SYSTEME DE FIXATION SERVANT A FIXER UNE SUPERSTRUCTURE DENTAIRE SUR UN IMPLANT

(30) Priority: 07.02.2007 SE 0700296
(43) Date of publication of application: 02.12.2009
(73) Proprietor: Kulzer GmbH, 63450 Hanau (DE)
(72) Inventor: LEIKE, Per Olof, S-427 38 Billdal (SE); BENZON, Sture, S-250 24 Helsingborg (SE)
(74) Representative: Andersson, Björn E.
(86) International application number: PCT/SE2008/050145
(87) International publication number: WO 2008/097186

(56) References cited:
- EP-A2- 0 953 318
- JP-A- H08 317 942
- US-A- 5 049 072
- US-A- 5 069 622
- US-A- 5 195 891
- US-A- 5 556 280
- US-A- 5 556 280
- US-A- 5 685 715
- US-A1- 2002 177 103
- US-B2- 6 561 805
- US-B2- 7 066 736

## Description

### Field of the Invention

This invention pertains in general to the field of a dental superstructure and a manufacturing method of said superstructure. More particularly the disclosure relates to a superstructure to be connected to an osseointegrated dental implant. A superstructure of this kind is disclosed in SE506850.

### Background of the Invention

The goal of a dental implant is to restore the patient to normal function, comfort, aesthetic, speech and health regardless of the current oral condition. This is obtained by dental implants in combination with superstructures, separate spacers, dental prosthesis etc. In this respect, the use of biocompatible titanium started in Sweden as early as 1950, and has since then been further developed and spread world-wide. During the 1980's a number of implant systems entered the world market.

These implant systems are based on the implantation of dental implants, such as dental implants made of the above mentioned biocompatible titanium, through insertion into the patient's jawbone. Healing spacers are then applied on the implants. These healing spacers are left during a period of time of 2 to 6 months, during which period of time osseointegration and healing of soft tissue takes place. During the healing period the gum, i.e. the soft tissue, is shaped after the healing spacers. After the healing period the healing spacers are removed and the dental superstructure is applied to the implants via separate spacers. These spacers are typically not of the same shape as the healing spacers, i.e. not shaped individually, and often even mass-produced. Thus, a bad matching between the superstructure and the spacers, and thereby the gum tissue is obtained. This results in an uneven attachment of the superstructure in respect of the gum. Thus, a bad fit, such as a gap, etc., between the gum and the superstructure is formed. The use of separate spacers also increases the time and complexity of the application of the dental superstructure to the implants. Also, the manufacturing and assembling of the different parts, such as the dental implant, superstructure, spacers etc., makes the process expensive and time consuming, resulting in an increased economic loss and prolonged period of time from the initiation to the termination of the implantation process.

A bad fit of the gum to the dental superstructure is aesthetically unpleasing and allows for example food debris to accumulate in the pocket between the superstructure and the gum tissue. Bacteria may also accumulate in the interface between the dental structure and the separate spacers, causing problems with odour and hygiene in the oral cavity.

SE506850 discloses a dental prosthesis system incorporating a superstructure and fixtures that are implantable in a person's jawbone. Each fixture is anchored in the jawbone and its opposite end is arranged so that it will be possible to attach the superstructure to it.

Furthermore, there is a problem in the technical field of dental systems and dental prostheses, especially in respect of elderly, with complications regarding the cleaning process of said dental system and/or prosthesis. It is a problem for nurses to get access to oral cavity of elderly, especially in circumstances where time is an essential factor. Thus, the cleaning process of such dental structures and prostheses may be performed in time intervals of lengthy proportions, which will render the hygiene in the oral cavity in bad shape, maybe resulting in loss of dental structures. Also, it is of discomfort for the patient to have bad oral hygiene.

US 5,556,280 discloses a dental prosthesis system for removably mounting a dental suppliance in a mouth, said system comprising a female member to be mounted on an implant, and a male member to be mounted on a superstructure, whereby the connection of these female and male members constitutes the removable mounting a dental suppliance in a mouth. However, since the female member comprises a mating hole for receiving the male member, and the female member is mounted on the implant, this system is accompanied by a problem during cleaning, since the cavity on the female member is complicated to clean when the cavity is still mounted in the mouth of the patient. Thus, it is easier for bacteria etc to remain in the cavity even after cleaning. Further prior art is disclosed in US 5,049,072 A, US 2002,177,103 A1, US 5,556280 A and EP 0,953,318 A2. EP 0 953 318 A2 discloses a dental system according to the preamble of claim 1.

Thus, there is a need for a new dental system that provides an easier and more effective cleaning process of said dental system, such that the oral hygiene of especially elderly may be optimized, while still providing a good fit in respect of the soft tissue in the mouth. There is a special need for a new dental system that facilitates the cleaning of the parts still in the mouth of the patient, since these parts are more complicated to clean due to their location.

Hence, an improved dental system would be advantageous, and in particular a dental system allowing for a good fit of the superstructure to the gum at the same time as the possibility of a good hygiene in the oral cavity is optimized.

### Summary of the Invention

Accordingly, the present invention seeks to mitigate, alleviate or eliminate one or more of the above-identified deficiencies and to provide an improved dental system as defined in claim 1.

Advantageous features of the invention are defined in the dependent claims.

### Brief Description of the Drawings

These and other aspects, features and advantages of which the invention is capable of will be apparent and elucidated from the following description of embodiments of the present invention, reference being made to the accompanying drawings, in which
Fig. 1 illustrates an embodiment of a dental system, and
Fig. 2 illustrates example of a dental system.
Fig. 3 illustrates a further embodiment of the present invention.

### Description of embodiments

The following description focuses on embodiments of the present invention applicable to an attachment system of a superstructure and a dental implant, and also to units comprised in embodiments of such an attachment system.

The dental superstructure with integrated spacers may be milled from one single-piece blank, such that the dental superstructure obtains a main body and at least one spacer. Thus, when a plurality of spacer elements are integrated in said superstructure the spacers may be dimensioned individually. When the superstructure is applied, the spacer(s) will be cooperating with dental implants, inserted and/or osseointegrated in bone tissue. It is possible to provide a facing material on said superstructure, which facing material emulates the appearance of real teeth. This may for example be done by cementing, or by the aid of any other suitable adhesive.

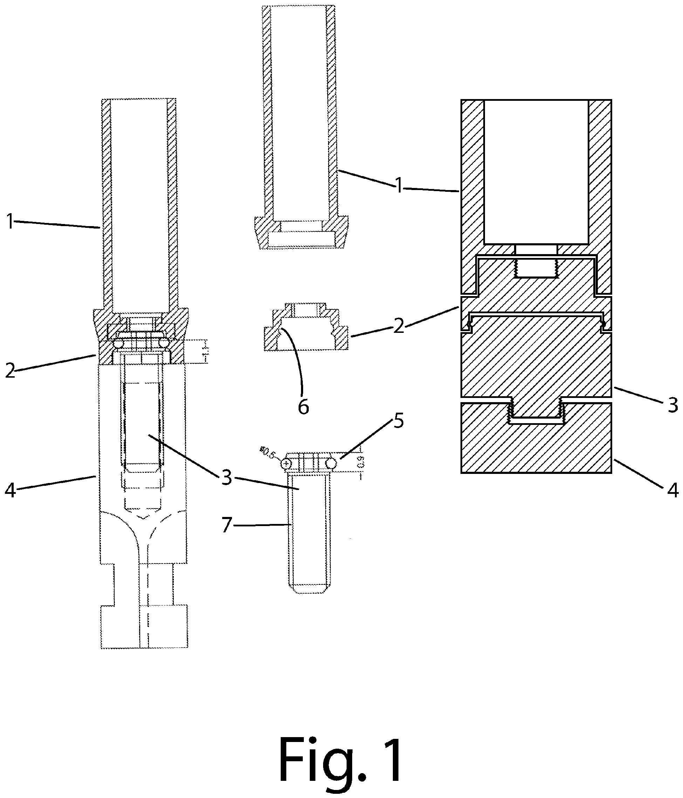

In one embodiment, according to Fig. 1, the present invention relates to an attachment system for a dental system comprising a superstructure 1, such as a dental prosthesis, an attachment device **2**, and an anchoring element **3**, to provide a removably secured cooperation between said superstructure and an implant **4.** The attachment device **2** may be screwed into cooperation with the superstructure **1**, by the aid of a screw member. The anchoring element **3** may be pushed into engagement with the attachment device **2.** In this respect the anchoring element **3** may be looked upon as a patrix and the attachment device **2** may be looked upon as a matrix. In the embodiment according to Fig. 1 this engagement is obtained by providing the anchoring element **3** with an annular outwardly extending flexible rib **5** and the attachment device **2** with an annular recess **6.** By pushing the rib **5** into the recess **6** the anchoring element **3** may be removably secured to the attachment device **2.** When the attachment device **2** is in cooperation with the superstructure **1**, by the aid of a screw member, the anchoring element **3** may also be removably secured to superstructure **1.** The anchoring element **3** is in turn adapted to be connected with a dental implant **4.** This adaptation may for example be obtained by providing the anchoring element with a threaded part **7,** which may be screwed into cooperation with a dental implant. When all connection points between a superstructure **1** and one or several dental implants are provided with a system comprising the attachment device **2** and the anchoring element **3,** the whole superstructure **1** will be removably attached and/or secured to the dental implant or implants. In this way a nurse may remove a dental prosthesis from the mouth of a patient, and the cleaning process of the prosthesis may be performed outside the mouth of the patient. It will also be possible to put the prosthesis in a disinfecting liquid, for example during night-time, to thereby disinfect and/or clean the prosthesis. When the prosthesis has been removed from the mouth of a patient the cleaning of the mouth may be facilitated, since a nurse easier can get access to areas that are hard to get access to when a prosthesis is in place, such as the interspace between the soft tissue and the prosthesis. It will also be especially easy to clean the mouth of the patient, since a patrix is easier to clean than a matrix, since the cavity of the matrix is more prone to retain bacteria than a patrix. This dental system may be adapted for different superstructures and implants available on the market, since only the attachment device **2** and/or the anchoring element **3** has to be adapted to the other parts of the dental system.

The term "removably secured" or "removably attached" is intended to be interpreted to describe a relationship between two units, elements, or devices that may be separated from each other without the use of tools, such as screwdrivers, where an undue force not has to be used to obtain the separation. Thus, a first element that is fixed to second element by the aid of screw member is not removably secured or removably attached to said second element, and neither is a first and a second element that are cemented together removably secured or removably attached to eachother.

According to another embodiment the removably securing action between the rib **5** and the recess **6** may be obtained by other cooperation effects than the one described above. It is for example possible to provide the anchoring element **3** with a recess in which an o-ring is fitted. Then the attachment device **2** may be removably attached to the anchoring element **3** by pushing the o-ring into the recess **6** the anchoring element **3**, to thereby removably secure the attachment device **2** to the anchoring element **3.** When the attachment device **2** is in cooperation with the superstructure **1**, by the aid of a screw member, the anchoring element **3** may also be removably secured to superstructure **1**, in accordance with the embodiment described above. By replacing the annular rib with an o-ring the cleaning process is rendered even more effective, since the o-ring may be removed from the anchoring element and cleaned by it self, and sharp edges formed between the rib and the anchoring element are excluded. Furthermore, it is within the scope of the invention to replace the rib by evenly, or unevenly, distributed studs, around the anchoring element, as long as the attachment device **2** may be removably attached to the anchoring element **3**, by pushing them into cooperation. Thus, it is also within the scope of the present invention to replace the annular recess in the attachment device **2** with several recesses distributed around the attachment device. This distribution may then preferably correspond to the distribution of the studs on the anchoring element, whereby the attachment device **2** and the anchoring element **3** may be pushed into a removably secured cooperation. It is even possible to provide one of the attachment device **2** and the anchoring element **3** with a magnet, and the other with a magnetic material, such that a magnetic force holds them together, whereby they will be in a removably secured cooperation.

In one embodiment of the present invention the attachment device **2** is provided with a rib, o-ring, or studs, and the anchoring element **3** is provided with a recess or recesses. This also applies when the attachment device **2** is integrated with the superstructure and/or when the anchoring element **3** is integrated with the dental implant, according to embodiments disclosed below.

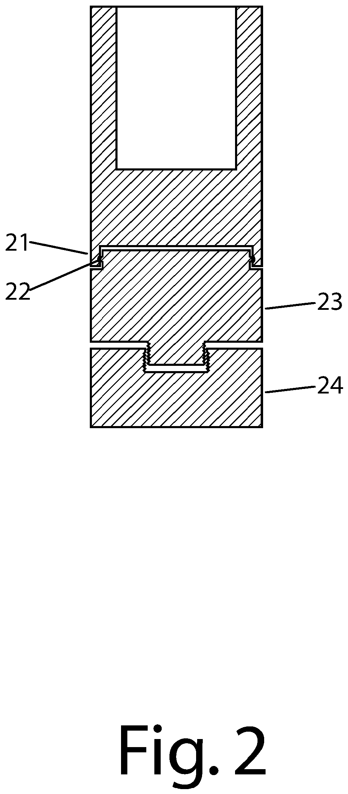

In an example for better understanding the invention, according to Fig 2, which is only an illustrative figure disclosing the relationship between the different parts of the dental system, the attachment device is integrated with the superstructure **21.** Thus, the recess or recesses **22** are integrated in the superstructure **21,** whereby the anchoring element **23** and the superstructure **21** may be pushed into a removably secured cooperation. This means that the superstructure **21,** such as a prosthesis, may be removably secured to a dental implant **24** when the anchoring element **23** has been attached to said dental implant. Thereby, the dental system comprises only a superstructure **21,** anchoring element(s) **23,** and dental implant(s) **24,** whereby the superstructure may be removably secured to the implant to simplify the cleaning process of the superstructure.

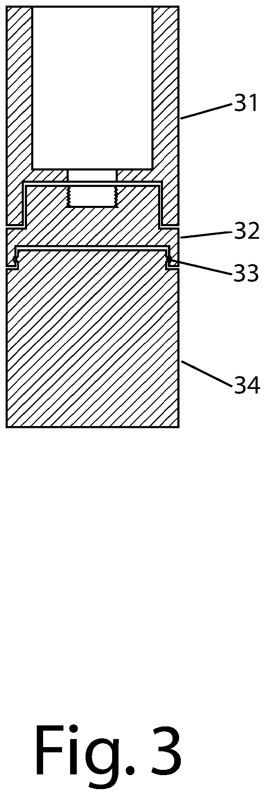

In a further embodiment, according to Fig. 3, which is only an illustrative figure disclosing the relationship between the different parts of the dental system, the anchoring element is integrated with the dental implant **34.** Thus, the rib or studs **33** are integrated in the dental implant, whereby the dental implant **34** and the superstructure **31** may be pushed into a removably secured cooperation via the attachment device **32.** This means that the superstructure **31,** such as a dental prosthesis, may be removably secured to a dental implant **34.** If the superstructure **31** and the attachment device **32** are separated, i.e. not integrated, the superstructure **31** may be removably secured to the dental implant when the attachment device **32** has been attached to said superstructure **31.** Naturally, the attachment device may be integrated with the superstructure, in accordance with Fig. 2, whereby the superstructure may be pushed into a directly removably secured cooperation with the dental implant. Thereby, the dental system comprises only a superstructure and dental implant(s), or a superstructure, attachment device(s), and dental implant(s), whereby the superstructure may be removably secured to the implant to simplify the cleaning process of the superstructure.

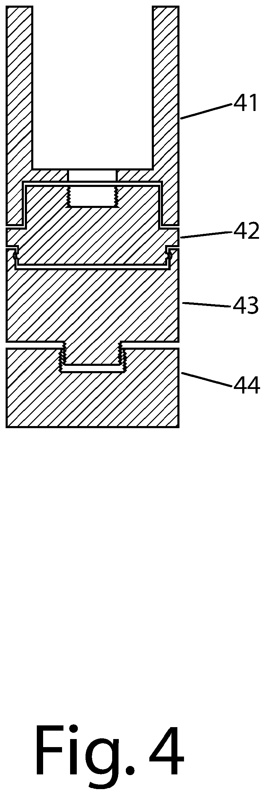

In another embodiment, according to Fig. 4, which is only an illustrative figure disclosing the relationship between the different parts of the dental system, there is a reverse relationship between the attachment device **42** and the anchoring element **43,** such that the attachment device **42** becomes a patrix and the anchoring element **43** becomes a matrix. This may also apply if the attachment device and/or anchoring element is/are integrated with the dental superstructure **41** and dental implant **44,** respectively, in accordance with Fig. 2 and Fig. 3.

The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units.

Although the present invention has been described above with reference to specific illustrative embodiments, it is not intended to be limited to the specific form set forth herein. Rather, the invention is limited only by the accompanying claims and other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A dental system comprising: a dental superstructure (1, 31, 41); a dental implant (4, 34, 44); an attachment device (2, 32, 42), connected to, or arranged at, said dental superstructure; and an anchoring element (3, 43), connected to, or arranged at, said dental implant, wherein said attachment device (2, 32, 42) and said anchoring element (3, 43) are removably securable to each other, wherein said attachment device (2, 32, 42) is provided with a matrix and the anchoring element (3, 43) with a patrix, wherein said matrix and patrix are arranged to be removably secured to each other by an engagement of at least one rib or stud arranged on the matrix or patrix, and at least one recess on the other one of said matrix and patrix, such that the matrix and the patrix may be pushed into engagement and pulled out of engagement, **characterized in that** the attachment device (2, 32, 42) is adapted to be screwed into cooperation with the dental superstructure (1, 31, 41) by the aid of a separate screw member.

2. The attachment system according to claim 1, wherein said at least one rib or stud is arranged on said patrix, and said at least one recess is arranged on said matrix.

3. The attachment system according to claim 1, wherein said rib is an o-ring.

## Patentansprüche

1. Dentales System umfassend: eine dentale Superstruktur (1, 31, 41); ein dentales Implantat (4, 24, 44); ein mit der dentalen Superstruktur verbundenes, oder an dieser angeordnetes, Befestigungsmittel (2, 32, 42); und ein mit dem dentalen Implantat verbundenes, oder an diesem angeordnetes, Verankerungselement (3, 43), wobei das Befestigungsmittel (2, 32, 42) und das Verankerungselement (3, 43) lösbar aneinander befestigbar sind, wobei das Befestigungsmittel (2, 32, 42) mit einer Matrize und das Verankerungselement (3, 43) mit einer Patrize versehen ist, wobei die Matrize und Patrize so angeordnet sind, dass sie durch einen Eingriff mindestens einer Rippe oder mindestens eines Bolzens auf der Matrize oder Patrize und mindestens einer Aussparung auf der jeweils anderen der Matrize oder Patrize lösbar aneinander befestigbar sind, so dass die Matrize und die Patrize in Eingriff geschoben und aus dem Eingriff gezogen werden können, **dadurch gekennzeichnet, dass** das Befestigungsmittel (2, 32, 42) ausgestaltet ist, um mit der dentalen Superstruktur (1, 31, 41) mithilfe eines separaten Schraubenelements verschraubt zu werden.

2. Befestigungssystem nach Anspruch 1, wobei die mindestens eine Rippe oder der mindestens eine Bolzen auf der Patrize angeordnet ist und die mindestens eine Aussparung auf der Matrize angeordnet ist.

3. Befestigungssystem nach Anspruch 1, wobei der die Rippe ein O-Ring ist.

## Revendications

1. Système dentaire comprenant : une superstructure dentaire (1, 31, 41) ; un implant dentaire (4, 34, 44) ; un dispositif de fixation (2, 32, 42), relié à, ou agencé sur, ladite superstructure dentaire ; et un élément d'ancrage (3, 43), relié à, ou agencé sur, ledit implant dentaire, dans lequel ledit dispositif de fixation (2, 32, 42) et ledit élément d'ancrage (3, 43) peuvent être fixés de manière amovible l'un à l'autre, dans lequel ledit dispositif de fixation (2, 32, 42) est pourvu d'une matrice et l'élément d'ancrage (3, 43) d'un patrice, dans lequel ladite matrice et ledit patrice sont agencés pour être fixés de manière amovible l'un à l'autre par une mise en prise d'au moins une nervure ou d'au moins un tenon agencé sur la matrice ou le patrice, et d'au moins un évidement sur l'autre parmi ladite matrice et ledit patrice, de sorte que la matrice et le patrice peuvent être poussés en mise en prise et retirés de la mise en prise, **caractérisé en ce que** le dispositif de fixation (2, 32, 42) est adapté pour être vissé en coopération avec la superstructure dentaire (1, 31, 41) à l'aide d'un élément de vis séparé.

2. Système de fixation selon la revendication 1, dans lequel ladite au moins une nervure ou ledit au moins un tenon est agencé sur ledit patrice, et ledit au moins un évidement est agencé sur ladite matrice.

3. Système de fixation selon la revendication 1, dans lequel ladite nervure est un joint torique.
